# FASCICULE DE BREVET EUROPEEN

(11) **EP 3 051 775 B1**
(45) Date de publication et mention de la délivrance du brevet: **16.10.2019**
(21) Numéro de dépôt: 16151208.2
(22) Date de dépôt: 14.01.2016
(51) Int. Cl.: H04L 29/08, H04L 29/06

(54) **SYSTÈME ET PROCÉDÉ DE COMMUNICATION DÉTERMINANT UN RENOUVELLEMENT OU UN MAINTIEN D'UNE SESSION DE COMMUNICATION SÉCURISÉE**
KOMMUNIKATIONSSYSTEM UND -VERFAHREN ZUM BESTIMMEN EINER ERNEUERUNG ODER WIEDERAUFNAHME EINER SICHEREN KOMMUNIKATIONSSITZUNG
COMMUNICATION SYSTEM AND METHOD DETERMINING A RENEWAL OR A RESUMING OF A SECURE COMMUNICATION SESSION

(30) Priorité: 02.02.2015 FR 1550766
(43) Date de publication de la demande: 03.08.2016
(73) Titulaire: Schneider Electric Industries SAS, 92500 Rueil-Malmaison (FR)
(72) Inventeur: PLATEL, Laurent, 38050 Grenoble (FR); CHICHE, Thierry, 38050 Grenoble (FR)
(74) Mandataire: Tripodi, Paul

(56) Documents cités:
- US-A1- 2003 226 017
- US-A1- 2012 120 858
- KIM KIHONG ET AL: "A Secure and Efficient Communication Resume Protocol for Secure Wireless Networks", 15 juin 2005 (2005-06-15), GRID AND COOPERATIVE COMPUTING - GCC 2004 : THIRD INTERNATIONAL CONFERENCE, WUHAN, CHINA, OCTOBER 21 - 24, 2004 IN: LECTURE NOTES IN COMPUTER SCIENCE , ISSN 0302-9743 ; VOL. 3251; [LECTURE NOTES IN COMPUTER SCIENCE , ISSN 1611-3349], SPRINGER VERLAG,, XP047304978, ISSN: 0302-9743 ISBN: 978-3-642-24711-8 * le document en entier *

## Description

### Domaine technique de l'invention

La présente invention se rapporte à un système et procédé de communication.

L'invention se rapporte plus précisément à un système de communication dans lequel un premier équipement et un deuxième équipement communiquent dans le cadre d'une session de communication sécurisée comprenant au moins une phase d'authentification.

### Etat de la technique

Dans la plupart des protocoles de communication connus, par exemple WIFI IEEE802.11 ou Bluetooth, un premier équipement et un deuxième équipement communiquent dans le cadre d'une session de communication sécurisée. Cette session de communication sécurisée se caractérise par une phase préalable d'authentification comportant la définition d'une clé de session et permettant de vérifier que le deuxième équipement est bien autorisé à communiquer avec le premier équipement. La clé de session est définie pour une durée limitée en vue de maintenir la sécurité de la communication. Plusieurs sessions de communication sécurisées peuvent s'enchainer avec, au début de chacune d'elles, une phase de négociation de la clé de session. Le document US 2003/226 017 A1 décrit un mode de communication sécurisée entre deux équipements.

Dans certaines applications, par exemple, la remontée de données de mesure par des capteurs vers une unité collectrice de données, le volume de données échangées et la fréquence d'émission des données peuvent être très faibles. Un capteur pourra par exemple émettre des données après une longue période de silence. Par ailleurs, les capteurs employés sont souvent conçus pour consommer peu d'énergie. Ils sont même parfois autonomes en énergie en employant des générateurs d'énergie, par exemple de type photovoltaïque.

Pour ce type d'application, il est donc nécessaire de limiter la consommation d'énergie liée à la communication entre les deux équipements. Autrement dit, un capteur ne doit pas consommer trop d'énergie pour s'authentifier alors que son volume de données à envoyer est très faible et que l'énergie nécessaire pour envoyer ces données est également très faible.

Le but de l'invention est de proposer un système de communication sans-fil comprenant un premier équipement et un deuxième équipement, permettant de limiter la consommation d'énergie liée à chaque phase d'authentification mise en oeuvre pour ouvrir une session de communication. Le but de l'invention est également de proposer le procédé de communication mis en oeuvre dans ledit système.

La solution de l'invention consiste à réduire l'empreinte énergétique de la communication grâce à une optimisation des mécanismes d'établissement et de maintien de la sécurité de la communication.

Ce but est atteint par un procédé d'analyse de communication défini dans la revendication 1.

Selon une particularité, l'étape d'analyse comporte une étape de vérification d'un niveau de confiance attribué au deuxième équipement, ledit niveau de confiance étant dégradé en cas d'incohérence entre les paramètres de la communication lors de la réception de la trame de communication et les paramètres mémorisés pour ladite communication.

L'invention concerne également un système de communication sans-fil défini dans la revendication 3.

Selon une particularité, le module logiciel d'analyse comporte un module de vérification d'un niveau de confiance attribué au deuxième équipement, ledit niveau de confiance étant dégradé en cas d'incohérence entre les paramètres de la communication lors de la réception de la trame de communication et les paramètres mémorisés pour ladite communication.

### Brève description des figures

D'autres caractéristiques et avantages vont apparaître dans la description détaillée qui suit faite en regard des dessins annexés dans lesquels :
- la figure 1 représente, de manière schématique, le système de communication de l'invention,
- la figure 2 représente l'algorithme mis en oeuvre pour l'analyse de la communication.

### Description détaillée d'au moins un mode de réalisation

L'invention concerne un système de communication sans-fil comprenant au moins un premier équipement 1 et un deuxième équipement 2. La communication entre le premier équipement 1 et le deuxième équipement 2 pourra faire intervenir différents types de relais de communication ou équipements intermédiaires chargés d'assurer la transmission des données.

Le premier équipement 1 sera par exemple une unité collectrice de données de mesure, tel que par exemple un serveur, destinée à collecter des données en provenance de un ou plusieurs capteurs. Elle comporte une unité de traitement dotée d'un microprocesseur 10 et de moyens de mémorisation 11 et un émetteur/récepteur 12 commandé par le microprocesseur 10 pour envoyer des données vers le deuxième équipement 2 et pour recevoir des données en provenance du deuxième équipement 2.

Le deuxième équipement 2 sera par exemple un capteur chargé d'envoyer des données de mesure à l'unité collectrices de données formant le premier équipement 1. Il pourrait s'agir de capteur de température, de gaz, d'humidité ou de toute autre grandeur classiquement mesurée. Le capteur sera préférentiellement à basse consommation d'énergie et sera amené à remonter des données de mesure vers l'unité collectrice de données à une fréquence donnée ou de manière aléatoire.

Le deuxième équipement 2 comporte notamment un microcontrôleur et un émetteur/récepteur commandé par le microcontrôleur pour envoyer des données vers le premier équipement 1 ou recevoir des données du premier équipement 1.

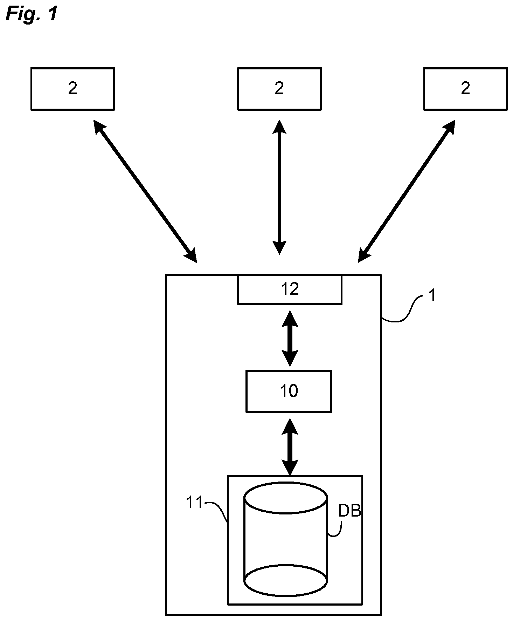

Sur la figure 1, plusieurs « deuxième équipement » 2 de type capteur sont représentés en communication avec le premier équipement.

L'invention vise à optimiser la consommation d'énergie du deuxième équipement 2 en réduisant le nombre de renégociation de la clé de session, tout en préservant le niveau de sécurité de la communication. L'invention permettra donc de maintenir chaque session de communication sécurisée le plus longtemps possible.

En règle générale, lorsque le deuxième équipement 2 doit envoyer des données vers le premier équipement 1, l'ouverture d'une session de communication sécurisée se déroule de la manière suivante :
- émission par le deuxième équipement 2 d'une requête d'ouverture de session à destination du premier équipement 1, ladite requête comportant au moins un identifiant du deuxième équipement 2,
- vérification par le premier équipement 1 de l'identifiant du deuxième équipement 2 dans une base de données,
- si le deuxième équipement 2 est identifié par le premier équipement 1, ce dernier détermine les paramètres de la session sécurisée. Ces paramètres sont notamment une clé de session et un identifiant spécifique pour la session à ouvrir,
- le premier équipement 1 transmet la clé de session et l'identifiant de session au deuxième équipement 2, ces paramètres étant chiffrés par le premier équipement 1 pour envoi au deuxième équipement 2,
- une fois les paramètres de session reçus par le deuxième équipement 2, celui-ci peut ensuite émettre des données à destination du premier équipement 1 dans le cadre de la session de communication sécurisée. Les données de mesure émises sont chiffrées à l'aide de la clé de session et envoyées sous forme chiffrée vers le premier équipement 1 en précisant l'identifiant de la session en cours.

En règle générale, la session de communication sécurisée est limitée en durée. Après une durée déterminée, à chaque nouvelle émission de données par le deuxième équipement 2 ou à la demande de l'un des deux équipements, la session de communication sécurisée doit être renégociée. Cela implique une nouvelle phase d'authentification, une nouvelle génération d'une clé de session... Or chaque mise en place d'une nouvelle session de communication est coûteuse en énergie électrique, notamment pour des équipements de type capteur basse consommation. Par ailleurs, le volume des données de mesure émises par le deuxième équipement 2 peut s'avérer faible en comparaison de celui nécessaire à la mise en place de la session de communication sécurisée.

L'invention vise donc à permettre de maintenir une session de communication sécurisée le plus longtemps possible en vue d'économiser l'énergie électrique disponible dans le deuxième équipement 2, tout en maintenant un niveau de sécurité élevé sur les données échangées.

Pour cela, le microprocesseur 10 de l'unité de traitement du premier équipement 1 exécute un module logiciel d'analyse doté d'un algorithme de décision. Ce module logiciel d'analyse est par exemple mémorisé dans les moyens de mémorisation 11 et permet de décider, par exemple à chaque réception d'une nouvelle trame de communication en provenance du deuxième équipement 2, si la session de communication sécurisée doit être maintenue ou renouvelée. Lors de l'exécution de cet algorithme, le premier équipement 1 analyse les paramètres de la communication en cours.

Deux modes d'analyse sont alors envisageables, un mode d'analyse basique et un mode d'analyse avancé. Le module logiciel d'analyse est agencé pour comparer des paramètres liés à la communication avec des paramètres mémorisés dans une base de données DB stockée dans les moyens de mémorisation 11. Dans le mode d'analyse avancé, le module logiciel d'analyse est agencé pour lire la trame de communication et en extraire des informations pertinentes permettant de vérifier le niveau de confiance accordé au deuxième équipement 2.

Dans le mode d'analyse basique, le module logiciel d'analyse du premier équipement 1 peut vérifier les paramètres suivants :
- la fréquence de réception d'une trame de communication en provenance de l'équipement émetteur,
- l'horodatage de la dernière trame de communication reçue,
- la longueur de la trame de communication reçue,
- s'il s'agit d'une communication radio, la position de l'émetteur de la trame de communication.

Dans le mode d'analyse avancé, en plus des paramètres listés ci-dessus pour le mode d'analyse basique, le module logiciel d'analyse du premier équipement 1 peut vérifier également :
- le type de données reçues, par exemple s'il s'agit d'une température, d'une pression, d'une valeur de courant...
- la position des données dans la trame de communication reçue,
- l'intervalle habituel des données reçues, c'est-à-dire si les données reçues restent dans une plage de valeurs habituelles,
- le nombre de données distinctes dans la trame de communication,
- la forme du tracé des données, lorsque ces données sont des mesures, c'est-à-dire linéaire, sinusoïdale...

Bien entendu, d'autres paramètres de la communication pourraient être envisagés.

Dans chacun des deux modes, le module logiciel d'analyse peut mettre en oeuvre une vérification sur certains critères uniquement. De même, il peut mettre en oeuvre le mode d'analyse basique et basculer à intervalles réguliers ou de manière aléatoire sur le mode d'analyse avancée, notamment lorsque la session n'a pas été renouvelée depuis un certain temps.

La base de données comporte ainsi une liste de tous les équipements avec qui le premier équipement 1 est ou a été en communication. Pour chaque session de communication sécurisée en cours avec chaque équipement, la base de données DB est mise à jour avec les paramètres de la communication listés ci-dessus, en tenant compte du mode d'analyse, basique ou avancé, mis en oeuvre avec chaque équipement.

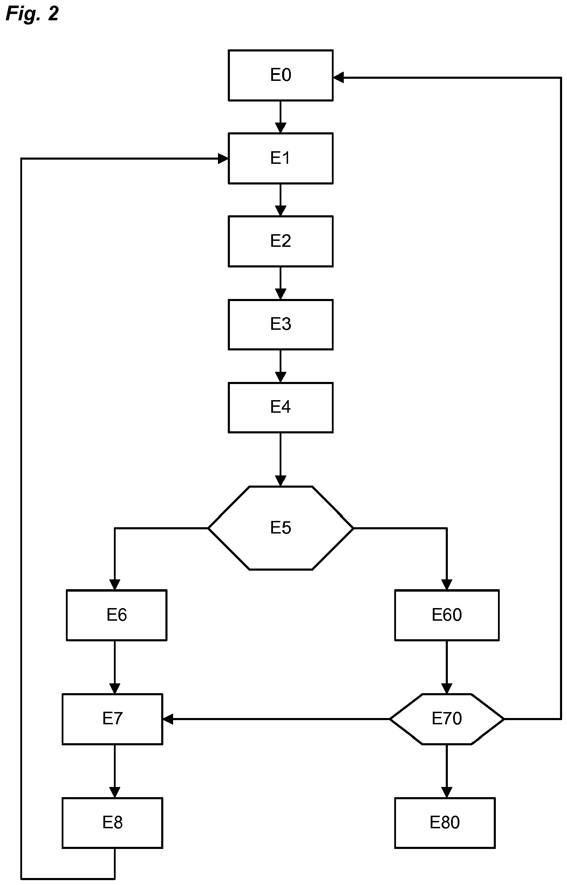

En référence à la figure 2, à l'étape E0, la session de communication sécurisée est négociée. Le premier équipement 1 et le deuxième équipement 2 communiquent entre eux pour l'ouverture d'une session de communication sécurisée, conformément aux étapes décrites ci-dessus. Le niveau de confiance attribué au deuxième équipement 2 par le premier équipement 1 est au maximum. Le niveau de confiance est par exemple matérialisé par un compteur dont la valeur est décrémentée lorsque le niveau de confiance attribué à l'équipement considéré diminue.

A l'étape E1, le premier équipement 1 reçoit une nouvelle trame de communication en provenance du deuxième équipement 2.

A l'étape E2, le module logiciel d'analyse est activé pour analyser les paramètres de la communication liés à cette trame de communication. Lors de cette analyse, le module logiciel d'analyse extrait les données pertinentes de la trame de communication, selon le mode d'analyse mis en oeuvre, c'est-à-dire basique ou avancé.

A l'étape E3, le module logiciel d'analyse recherche les paramètres de la communication mémorisés dans sa base de données DB lors des sessions de communication sécurisées précédentes et mis à jour durant la session de communication sécurisée en cours.

A l'étape E4, le module logiciel d'analyse compare les paramètres de la communication extraits à la réception de la nouvelle trame de communication avec les paramètres de communication mémorisés dans la base de données DB.

A l'étape E5, le module logiciel d'analyse détermine s'il existe une cohérence entre les paramètres de la communication extraits pour la trame de communication et les paramètres de la communication mémorisés.

A l'étape E6, si une cohérence est établie, le niveau de confiance attribué au deuxième équipement est maintenu, entraînant le maintien de la session de communication sécurisée avec le deuxième équipement 2.

A l'étape E7, le module logiciel d'analyse commande alors l'enregistrement des données présentes dans la trame de communication analysée.

A l'étape E8, le module logiciel d'analyse met à jour la base de données DB pour le deuxième équipement 2 avec les paramètres de la communication liés à la dernière trame de communication reçue et le niveau de confiance attribué à cet équipement. La trame de communication est ainsi validée et son traitement se poursuit conformément au protocole de communication employé.

A l'étape E1, le module logiciel d'analyse se met alors en attente d'une nouvelle trame de communication en provenance du deuxième équipement 2 dans le cadre de la session de communication en cours et qui a été maintenu.

A l'étape E60, si les paramètres de la communication extraits pour la trame de communication reçue ne sont pas cohérents avec les paramètres de la communication mémorisés, le module logiciel d'analyse diminue alors le niveau de confiance attribué au deuxième équipement. Il s'agit par exemple de décrémenter le compteur correspondant d'une valeur définie par défaut. Cette valeur peut être commune à tous les types d'incohérence ou être définie par type d'incohérence.

A l'étape E70, le module logiciel d'analyse vérifie alors, grâce à un module de vérification, le niveau de confiance attribué au deuxième équipement 2.

Si le niveau de confiance est devenu insuffisant (par exemple compteur inférieur ou égal à une valeur seuil), une nouvelle négociation de la clé de session est demandée à l'étape E80. Le niveau de confiance attribué au deuxième équipement 2 étant trop dégradé, l'ouverture d'une nouvelle session de communication sécurisée avec le deuxième équipement 2 est alors nécessaire.

Si le niveau de confiance attribué au deuxième équipement 2 reste acceptable (par exemple compteur supérieur à ladite valeur seuil), les données comprises dans la trame de communication reçue sont enregistrées et le module logiciel d'analyse repasse à l'étape E7 et poursuit ensuite avec l'étape E8. Le module logiciel d'analyse se met ensuite en attente d'une nouvelle trame de communication en provenance du deuxième équipement 2, conformément à l'étape E1.

La solution de l'invention est d'une mise en oeuvre aisée car elle s'insère facilement au niveau du premier équipement 1, notamment dans le cadre d'un protocole de communication de type SSL (« Secure Sockets Layer ») ou TLS (« Transport Layer Security »). Dans le cadre d'un protocole de ce type, la pile de communication reste identique, le module logiciel d'analyse étant juste ajouté pour décider de maintenir ou non la session de communication sécurisée.

Selon l'invention, si la session de communication sécurisée a été renouvelée récemment, par exemple en comparant la durée écoulée depuis la dernière ouverture de session avec une valeur seuil, le module logiciel d'analyse peut accepter les données d'une trame de communication même si les paramètres de la communication liés à cette trame de communication ne sont que partiellement respectés.

## Revendications

1. Procédé d'analyse de communication mis en oeuvre dans un premier équipement (1) agencé pour recevoir des trames de communication en provenance d'un deuxième équipement (2), ledit premier équipement (1) et ledit deuxième équipement (2) étant agencés pour établir entre eux une communication dans le cadre d'une session de communication sécurisée, ledit procédé étant tel que, après ouverture de ladite session sécurisée entre le premier équipement et le deuxième équipement, ledit procédé comprenant les étapes suivantes :
- une étape de mémorisation de paramètres liés à la communication établie avec le deuxième équipement (2) durant la session de communication sécurisée,
- une étape d'analyse mise en oeuvre à la réception d'une trame de communication en provenance du deuxième équipement (2) et comprenant une analyse des paramètres de la communication lors de la réception de la trame de communication par rapport aux paramètres mémorisés pour ladite communication,
- une étape de détermination d'un renouvellement ou d'un maintien de la session de communication sécurisée en fonction de l'analyse effectuée, ledit procédé étant **caractérisé en ce que** :
- l'étape d'analyse est mise en oeuvre suivant un mode d'analyse basique ou suivant un mode d'analyse avancé et **en ce que** :
- dans le mode d'analyse basique, les paramètres de la communication mémorisés comportent :
- la fréquence de réception d'une trame de communication en provenance du deuxième équipement (1),
- l'horodatage de la dernière trame de communication reçue, et
- dans le mode d'analyse avancé, les paramètres de la communication mémorisés comportent :
- le type de données,
- la position des données dans la trame de communication,
- l'intervalle habituel des données reçues,
- le nombre de données distinctes dans la trame de communication.

2. Procédé selon la revendication 1, **caractérisé en ce que** l'étape d'analyse comporte une étape de vérification d'un niveau de confiance attribué au deuxième équipement (2), ledit niveau de confiance étant dégradé en cas d'incohérence entre les paramètres de la communication lors de la réception de la trame de communication et les paramètres mémorisés pour ladite communication.

3. Système de communication sans-fil comprenant :
- un premier équipement (1) agencé pour recevoir des trames de communication,
- un deuxième équipement (2) étant agencé pour émettre des trames de communication à destination du premier équipement (1),
- ledit premier équipement (1) et ledit deuxième équipement (2) étant agencés pour établir entre eux une communication dans le cadre d'une session de communication sécurisée,
le premier équipement (1) comportant :
- des moyens de mémorisation de paramètres liés à la communication établie avec le deuxième équipement (2) durant la session de communication sécurisée,
- un module logiciel d'analyse exécuté après ouverture de la session de communication sécurisée pour analyser des paramètres de la communication lors de la réception d'une trame de communication en provenance du deuxième équipement (2) par rapport aux paramètres mémorisés pour ladite communication et pour déterminer un renouvellement ou un maintien de la session de communication sécurisée en fonction de l'analyse effectuée,
ledit système de communication sans-fil étant **caractérisé en ce que** :
- le module logiciel d'analyse est configuré pour fonctionner suivant un mode d'analyse basique ou suivant un mode d'analyse avancé et **en ce que** :
- dans le mode d'analyse basique, les paramètres de la communication mémorisés comportent :
- la fréquence de réception d'une trame de communication en provenance du deuxième équipement (2),
- l'horodatage de la dernière trame de communication reçue, et
- dans le mode d'analyse avancé, les paramètres de la communication mémorisés comportent :
- le type de données,
- la position des données dans la trame de communication,
- l'intervalle habituel des données reçues,
- le nombre de données distinctes dans la trame de communication.

4. Système selon la revendication 3, **caractérisé en ce que** le module logiciel d'analyse comporte un module de vérification d'un niveau de confiance attribué au deuxième équipement (2), ledit niveau de confiance étant dégradé en cas d'incohérence entre les paramètres de la communication lors de la réception de la trame de communication et les paramètres mémorisés pour ladite communication.

## Patentansprüche

1. Verfahren zur Analyse von Kommunikation, das in einer ersten Ausrüstung (1) durchgeführt wird, die angeordnet ist, Kommunikationsrahmen von einer zweiten Ausrüstung (2) zu empfangen, wobei die erste Ausrüstung (1) und die zweite Ausrüstung (2) angeordnet sind, zwischeneinander eine Kommunikation im Rahmen einer sicheren Kommunikationssitzung herzustellen, wobei das Verfahren so beschaffen ist, dass nach Eröffnung der gesicherten Sitzung zwischen der ersten Ausrüstung und der zweiten Ausrüstung, das Verfahren die folgenden Schritte umfasst:
- einen Schritt des Speicherns von Parametern, die mit der Kommunikation in Verbindung stehen, die mit der zweiten Ausrüstung (2) während der gesicherten Kommunikationssitzung hergestellt wird,
- einen Schritt des Analysierens, der beim Empfang eines Kommunikationsrahmens von der zweiten Ausrüstung (2) durchgeführt wird und eine Analyse der Parameter der Kommunikation beim Empfang des Kommunikationsrahmens im Vergleich zu den Parametern, die für die Kommunikation gespeichert sind, umfasst,
- einen Schritt des Bestimmens einer Verlängerung oder einer Aufrechterhaltung der gesicherten Kommunikationssitzung in Abhängigkeit von der durchgeführten Analyse, wobei das Verfahren **dadurch gekennzeichnet ist, dass**:
- der Schritt des Analysierens nach einer einfachen Analysemethode oder nach einer fortgeschrittenen Analysemethode durchgeführt wird, und dadurch, dass:
- bei der einfachen Analysemethode die gespeicherten Parameter der Kommunikation Folgendes umfassen:
- die Empfangshäufigkeit eines Kommunikationsrahmens von der zweiten Ausrüstung (1),
- den Zeitstempel des letzten empfangenen Kommunikationsrahmens, und
- bei der fortgeschrittenen Analysemethode die gespeicherten Parameter der Kommunikation Folgendes umfassen:
- den Datentyp,
- die Position der Daten in dem Kommunikationsrahmen,
- das gewöhnliche Intervall der empfangenen Daten,
- die Anzahl separater Daten in dem Kommunikationsrahmen.

2. Verfahren nach Anspruch 1, **dadurch gekennzeichnet, dass** der Schritt des Analysierens einen Schritt des Überprüfens eines Vertrauensniveaus aufweist, das der zweiten Ausrüstung (2) zugeteilt wird, wobei das Vertrauensniveau im Fall einer Inkohärenz zwischen den Parametern der Kommunikation beim Empfang des Kommunikationsrahmens und den Parametern, die für die Kommunikation gespeichert sind, herabgesetzt wird.

3. Drahtloses Kommunikationssystem, umfassend:
- eine erste Ausrüstung (1), die angeordnet ist, Kommunikationsrahmen zu empfangen,
- eine zweite Ausrüstung (2), die angeordnet ist, Kommunikationsrahmen an die erste Ausrüstung (1) zu senden,
- wobei die erste Ausrüstung (1) und die zweite Ausrüstung (2) angeordnet sind, zwischeneinander eine Kommunikation im Rahmen einer sicheren Kommunikationssitzung herzustellen,
die erste Ausrüstung (1) aufweisend:
- Mittel zur Speicherung von Parametern, die mit der Kommunikation in Verbindung stehen, die mit der zweiten Ausrüstung (2) während der gesicherten Kommunikationssitzung hergestellt wird,
- ein Software-Analysemodul, das nach Eröffnung der gesicherten Kommunikationssitzung ausgeführt wird, um Parameter der Kommunikation beim Empfang eines Kommunikationsrahmens von der zweiten Ausrüstung (2) im Vergleich zu den Parametern zu analysieren, die für die Kommunikation gespeichert sind, und um eine Verlängerung oder eine Aufrechterhaltung der gesicherten Kommunikationssitzung in Abhängigkeit von der durchgeführten Analyse zu bestimmen, wobei das drahtlose Kommunikationssystem **dadurch gekennzeichnet ist, dass**:
- das Software-Analysemodul dazu ausgebildet ist, nach einer einfachen Analysemethode oder nach einer fortgeschrittenen Analysemethode zu funktionieren, und dadurch, dass:
- bei der einfachen Analysemethode die gespeicherten Parameter der Kommunikation Folgendes umfassen:
- die Empfangshäufigkeit eines Kommunikationsrahmens von der zweiten Ausrüstung (2),
- den Zeitstempel des letzten empfangenen Kommunikationsrahmens, und
- bei der fortgeschrittenen Analysemethode die gespeicherten Parameter der Kommunikation Folgendes umfassen:
- den Datentyp,
- die Position der Daten in dem Kommunikationsrahmen,
- das gewöhnliche Intervall der empfangenen Daten,
- die Anzahl separater Daten in dem Kommunikationsrahmen.

4. System nach Anspruch 3, **dadurch gekennzeichnet, dass** das Software-Analysemodul ein Modul zur Überprüfung eines Vertrauensniveaus aufweist, das der zweiten Ausrüstung (2) zugeteilt ist, wobei das Vertrauensniveau im Fall einer Inkohärenz zwischen den Parametern der Kommunikation beim Empfang des Kommunikationsrahmens und den Parametern, die für die Kommunikation gespeichert sind, herabgesetzt wird.

## Claims

1. Communication analysis method implemented in a first device (1) designed to receive communication frames originating from a second device (2), the said first device (1) and the said second device (2) being designed to establish between them a communication within the framework of a secure communication session, the said method being such that, after opening of the said secure session between the first device and the second device, the said method comprises the following steps:
- a step of storing parameters related to the communication established with the second device (2) during the secure communication session,
- an analysis step implemented on the reception of a communication frame originating from the second device (2) and comprising an analysis of the parameters of the communication upon the reception of the communication frame with respect to the parameters stored for the said communication,
- a step of determining a renewal or a maintaining of the secure communication session as a function of the analysis performed,
the said method being **characterized in that**:
- the analysis step is implemented according to a basic analysis mode or according to an advanced analysis mode and **in that**:
- in the basic analysis mode the stored parameters of the communication comprise:
- the frequency of reception of a communication frame originating from the second device (1),
- the time-stamping of the last communication frame received, and
- in the advanced analysis mode, the stored parameters of the communication comprise:
- the type of data,
- the position of the data in the communication frame,
- the customary interval of the received data,
- the number of distinct data in the communication frame.

2. Method according to Claim 1, **characterized in that** the analysis step comprises a step of verifying a trust level allotted to the second device (2), the said trust level being degraded in case of inconsistency between the parameters of the communication upon the reception of the communication frame and the parameters stored for the said communication.

3. Wireless communication system comprising:
- a first device (1) designed to receive communication frames,
- a second device (2) being designed to emit communication frames destined for the first device (1),
- the said first device (1) and the said second device (2) being designed to establish between them a communication within the framework of a secure communication session,
- the first device (1) comprising:
- means for storing parameters related to the communication established with the second device (2) during the secure communication session,
- an analysis software module executed after opening of the secure communication session to analyse parameters of the communication during the reception of a communication frame originating from the second device (2) with respect to the parameters stored for the said communication and to determine a renewal or a maintaining of the secure communication session as a function of the analysis performed,
the said wireless communication system being **characterized in that**:
- the analysis software module is configured to operate according to a basic analysis mode or according to an advanced analysis mode and **in that**:
- in the basic analysis mode the stored parameters of the communication comprise:
- the frequency of reception of a communication frame originating from the second device (2),
- the time-stamping of the last communication frame received, and
- in the advanced analysis mode, the stored parameters of the communication comprise:
- the type of data,
- the position of the data in the communication frame,
- the customary interval of the received data,
- the number of distinct data in the communication frame.

4. System according to Claim 3, **characterized in that** the analysis software module comprises a module for verifying a trust level allotted to the second device (2), the said trust level being degraded in case of inconsistency between the parameters of the communication upon the reception of the communication frame and the parameters stored for the said communication.
